# EUROPEAN PATENT SPECIFICATION

(11) **EP 0 775 444 B1**
(45) Date of publication and mention of the grant of the patent: **12.12.2001**
(21) Application number: 96202913.8
(22) Date of filing: 18.10.1996
(51) Int. Cl.: A23D 9/007, A23L 1/221, A23L 1/36

(54) **Pourable fat compositions**
Vergiessbare Fettzusammenzetzungen
Compositions de graisses pouvant couler

(30) Priority: 25.10.1995 EP 95202895
(43) Date of publication of application: 28.05.1997
(73) Proprietor: UNILEVER N.V., 3000 DK Rotterdam (NL); UNILEVER PLC, London EC4P 4BQ (GB)
(72) Inventor: Van Oosten, Cornelis Willem, Unilever, 3133 AT Vlaardingen (NL); Cornelissen, Johannes M., Unilever Schweiz AG, 6300 Zug (CH)
(74) Representative: Joppe, Hermina L. P.

(56) References cited:
- EP-A- 0 021 483
- EP-A- 0 351 122
- EP-A- 0 396 810
- EP-A- 0 536 976
- WO-A-94/08470
- DE-A- 1 904 658
- US-A- 3 071 475
- US-A- 4 572 836
- PATENT ABSTRACTS OF JAPAN vol. 010, no. 203 (C-360), 16 July 1986 & JP 61 047165 A (TAIYO YUSHI KK), 7 March 1986,

## Description

Fat-compositions that contain herbs and/or spices are known in the prior art (c.q. US 4,572,836). However so far these compositions are only known as pastes, or other non-pourable herbs-dispersions, wherein the fats applied in the paste have high trans-contents; these products contain high levels (>12%) of cooking salt and other inorganic or organic salts for microbiological keepability and taste boosting effect reasons.
Therefore no solution existed for a long felt need, i.e. a fat product, that could be handled easily, e.g. by being in a pourable form, which contained high concentrations of herbs, spices, nuts, cheese and/or seeds and low concentrations of the unhealthy trans-fats, while its closed shelf life was at least 6 months.

In EP 21 483 it is disclosed that flavor enhancing materials in the form of ionic salts, such as sodium chloride can be incorporated in liquefiable fats if they are first micronised to a particle size of 1-10 microns. In that instance compositions can be obtained, which are stable for more than 2 hours. Incorporation of a hardstock fat can increase the stability to about 6 months. Examples of hardstock fats mentioned are fully hydrogenated normally solid fatty triglycerides with an IV <15. These hardstocks can contain fatty acid residues with 12-22 C-atoms. Examples of hardened oils are given on p.8, 1.3-8, however this listing does not include hardened rape seed oils. Although the disclosure of this document is very generic in the definition of the flavor enhancing component, it is also clear from this document that the only flavor enhancing components, that were actually considered, are ionic salts. Therefore this document does not provide directions how to come to pourable fat compositions with very high contents of herbs and/or spices, that would be stable for long periods of time (=having long closed shelf life).

From WO 94/08470 salad dressings are known, wherein the fat phase can contain a hardened rapeseed oil component. The dressing further can contain up to 4 wt% of a herb or spices. Therefore this document does not provide a solution for systems wherein no waterphase is present and that contain high amounts of herbs and/or spices.

We now found a fat-composition that fulfils all above requirements. So our invention concerns a pourable fat-composition, that is ambient-stable, and wherein the fat-composition comprises:
10 - 45 wt % of herbs, spices, nuts and/or seeds
0 - 20 wt % of cheese particles
1 - 10 wt % of an edible salt
50 - 89 wt % of a fatblend, comprising:
   (i) 90 - 99.8 wt % of liquid oil
   (ii) 10 - 0.2 wt % of a hard fat component, that has the ability to form a crystal network in the endproduct, preferably being hardened high erucic rapeseed oil, while the total-composition is flavoured by the presence of 0.5 - 5 wt % on total composition of flavour-ingredients.

Above compositions are substantially free of trans fatty acids. In fact the amounts of trans acids are less than 5 wt%, preferably less than 0.5 wt%. (Calculated on total fatty acid content.)

Herbs are defined in The Illustrated Herbal Handbook by J. de Baïracli Levy, Faber and Faber Ltd., Londen, chapter 3. Spices are defined in "The Book of Spices", Livingstone Publ. Comp. 1969, p. 3.

The amount of herbs and/or spices preferably is 15 - 35 wt %, more preferably 20 - 30 wt %. The amount of nuts and/or seeds is preferably 10-20 wt %, more preferably 12-15 wt %.

The herbs and spices are preferably used as frozen herbs or spices, containing 10 - 95 wt % of water. Preferred herbs are selected from the group, consisting of sage, rosemary, basil, thymian, oregano, dill, parsley, garlic, onion, savory, majoram, dragon, red/green/yellow pepper and mixtures thereof known as Provencal and Italian, while the spices are selected from the group, consisting of black and white pepper, nut meg, mace, curry, curcuma, saffron, clove and mixtures thereof.

The cheese-particles can be selected from any cheese, which can be ground. The particle size of the cheese particles can range from 0.05 to 2 mm, preferably from 0.5 - 1 mm. The amount of cheese-particles that is preferred ranges from 5 - 15 wt %.

The edible salt can be derived from inorganic or organic acids or bases. The most preferred edible salt is NaCl. The preferred amount is 2 - 7 wt %.

The fat phase can contain small amounts of surfactants (up to 2 wt%). Suitable surfactants are e.g. mono/diglycerides-mixtures, but in general any known surfactant can be applied.
The fatblend is present in our compositions in an amount of 50 - 89 wt %, preferably 60 - 85 wt %, more preferably 70 - 80 wt %.

The liquid oil, which is applied in amounts of 90 - 99.8 wt % in these fatblends can be selected from the group, consisting of: sunflower oil, high oleic sunflower oil, safflower oil, high oleic safflower oil, soyabean oil, maize oil, cotton seed oil, arachidic oil, olein-fractions of natural oils, such as palm oil olein, MCT - oils. The oil displays a solid fat content (NMR-pulse, not-stab.) of less than 10 % at 20 ° C. Preferably the amount of liquid oil is 93 - 99, most preferably 95 - 98 wt % in the fatblend.

The hard fat component of these blends must have the ability to form a crystal network in our compositions. This requirement is essential in order to come to stable compositions, wherein the herbs and/or spices remain dispersed during the shelf life of the compositions. Examples of suitable fats are hardened rapeseed oil, hardened sunflower seed oil, hardened soybean oil, hardened palm oil or mixtures thereof. The best results were obtained, by using hard fats, having an I.V. < 10, preferably containing > 40 wt % of C₂₀₊ - saturated fatty acids. A most preferred hard fat is fully hardened, high erucic rapeseed oil (Rp-70).

The pourable character of our compositions is guaranteed when the fatblend of liquid oil and 1-5 wt% hard fat-component has an apparent viscosity at 5 °C of 100-500 m.Pa.s. after storage for 5 days at 5 °C, at a shear of 200 s-1. The apparent viscosity at 20 °C being suitably between 50 and 300 m.Pa.s.

The apparent viscosity is measured with a Physica UM-MC-100 viscometer on a sample of about 20 ml of liquid oil, containing 1-5 wt % of the hard fat-component. The blend is first stored for 5 days at measurement temperature, whereupon it is subjected to a shear of 200 s-¹. The viscosity is measured after 2 min. shearing.

The flavour-component can be selected from etherical oils, natural or nature-identical flavour components. Our compositions can be made by known techniques.Suitable procedures involve the preparation of a premix of liquid oil and hard fat, using two A-units. After mixing of the oil and hard fat at 70-85 °C the mix can be transferred through an A1-unit, using an exit temperature of 0-10 °C and subsequently through an A2-unit, using a lower exit temperature of -8 to 5 °C. The herbs can be added in one badge to the oil or can be added in different badges to the fat mix during different phases of the process.
However we prefer to apply a process, wherein a cooling step is applied on the mixture of herbs and/or spices in the oil, prior to the addition of the hard fat component. In this way a better crystal network of the hard fat component can be established as a result of the addition of the hard fat component at a lower temperature. Therefore our invention also concerns a process for the preparation of our pourable fat-compositions, according to which process,
(i) herbs, spices, nuts and/or seeds are mixed with part of the liquid oil, which optionally is preheated
(ii) the mix, resulting of (i) is optionally heated at 70 - 85 °C for 2 - 10 min.
(iii) the mix, resulting from (i) or the heated mix, resulting from (ii) is cooled to a temperature of maximum 25 °C
(iv) the rest of the liquid oil is mixed with the hard-fat component at a temperature below 30 °C
(v) the products from (iii) and (iv) are mixed under the addition of the edible salt resulting in the product according to claims 1 - 9.

The herbs are preferably applied as deepfrozen products. The spices are applied as freeze-dried or dry, finely ground products as normally used in the kitchen area. It was found, that the best ambient-stability was obtained, if in step (ii) the mix obtained in step (i) is heated to 70 - 85 °C for 2 - 10 min, preferably 4 - 8 min.

The mixing according to step (iv) can be performed by any conventional mixing technique. However it was found that the best dispersions were obtained if this mixing was performed in a votator (= scraped surface heat-exchanger).

### EXAMPLES

1. 280 g. of sunflower oil was heated to 80 °C. 100 g. of deepfrozen (- 20 °C) basil were added to this mix. The temperature was maintained at 75 °C for 5 min. by heating. The mixture obtained is cooled, while stirred, to 12 °C in about 10 min.
   A mixture of 120 g. fat (composition: 92% sunflower oil and 8% hardened rapeseed oil m.pt. 70 °C) and 8 g. of Basil etheric oil (ex Tastemaker, art. no. KT 0117) as flavour ingredients and 24 g. NaCl were added to the mixture at 12 °C. An additional stirring during 10 min. was performed.
   The product was collected.
2. The procedure of example 1 was repeated, however applying hardened sunflower oil m.pt.69 °C in stead of hardened rapeseed oil m.pt.70 °C. The amount of hardened sunflower oil was 4 wt% on total oil.
   Above fat was applied for the preparation of compositions containing 44 wt% Dille or 44 wt% of a Provencal mix(=a mix of Marjoram herbs, Thyme herbs, Basil herbs, Rosemary herbs and Garlic paste in wt-ratio: 12.5: 2.5: 3.5: 2.5: 4.0).
   The products obtained had acceptable properties, but were somewhat viscous and wither.
3. The procedure of example 2 was repeated, however using hardened rapeseed oil m.pt.70 °C in stead of hardened sunflower oil in an amount of 3 wt% on total oil.
   The products obtained were not viscous and were not wither, so the products performed better than the products of example 2.
4. The procedure of example 3 was repeated, however applying a fat consisting of 25 wt% olive oil and 75 wt% sunflower oil.
   The hardened rapeseed was used in an amount of 2.5 wt%. Dille was applied as herb.
   The product obtained displayed excellent properties.

## Claims

1. Pourable fat-composition, that is ambient-stable, wherein the fat-composition comprises:
10 - 45 wt % of herbs, spices, nuts and/or seeds
0 - 20 wt % of cheese particles
1 - 10 wt % of an edible salt
50 - 89 wt % of a fatblend, comprising:
(i) 90 - 99.8 wt % of liquid oil
(ii) 10 - 0.2 wt % of a hard fat component, that has the ability to form a crystal network in the endproduct, preferably being hardened high erucic rapeseed oil,
while the total-composition is flavoured by the presence of 0.5 - 5 wt % on total composition of flavour-ingredients, and the said fat-composition is substantially free of trans fatty acids which amounts of trans acids are less than 5 wt%, preferably less than 0,5 wt% calculated on the total fatty acid content.

2. Pourable fat-composition according to claim 1, wherein the herbs and/or spices are frozen fresh herbs and/or spices, containing 10 - 95 wt % of water.

3. Pourable fat-composition according to claims 1 or 2, wherein the herbs are selected from the group, consisting of sage, rosemary, basil, thymian, oregano, dill, parsley, garlic, onion, savory, majoram, dragon, red/green/yellow pepper and mixtures thereof known as Provencal and Italian, while the spices are selected from the group, consisting of black and white pepper, nut meg, mace, curry, curcuma, saffron, clove and mixtures thereof.

4. Pourable fat-composition, according to claim 3, wherein the salt is NaCl.

5. Pourable fat-composition, according to claim 1, wherein the liquid oil is selected from the group, consisting of: sunflower oil, high oleic sunflower oil, safflower oil, high oleic safflower oil, soyabean oil, maize oil, cotton seed oil, arachidic oil, olein-fractions of natural oils, such as palm oil olein, MCT - oils.

6. Pourable fat-composition according to claim 5, wherein the oil displays a solid fat-content (NMR-pulse; not-stab.) of less than 10 % at 20 °C.

7. Pourable fat-composition according to claims 1 - 6, wherein the hard fat has an Iodine value of less than 10 and contains preferably more than 40 wt % of C₂₀₊ - saturated fatty acids.

8. Pourable fat-composition according to claims 1 - 7, wherein the fatblend of liq. oil and 1-5 wt % hard fat-component has an apparent viscosity at 5 °C of 100-500 m.Pa.s. after storage for 5 days at 5 °C, or at 20 °C of 50-300 m.Pa.s. after storage for 5 days at 20 °C, both at a shear of 200 s⁻¹.

9. Pourable fat-composition according to claim 1, wherein the flavour-component is selected from etherical oils, natural or nature-identical flavour components.

10. Process for preparing a pourable fat-composition according to claim 1-9, wherein:
(i) herbs and/or spices are mixed with part of the liquid oil, which optionally is preheated
(ii) the mix, resulting of (i) is optionally heated at 70 - 85 °C for 2 - 10 min.
(iii) the mix, resulting from (i) or the heated mix, resulting from (ii) is cooled to a temperature of maximum 25 °C
(iv) the rest of the liquid oil is mixed with the hard-fat component at a temperature below 30 °C,
(v) the products from (iii) and (iv) are mixed under the addition of the edible salt resulting in the product according to claims 1 - 9.

## Patentansprüche

1. Vergießbare Fettzusammensetzung, die umgebungsstabil ist, worin die Fettzusammensetzung umfaßt:
10 bis 45 Gew.-% Kräuter, Gewürze, Nüsse und/oder Samen,
0 bis 20 Gew.-% Käseteilchen,
1 bis 10 Gew.-% eines verzehrbaren Salzes,
50 bis 89 Gew.-% einer Fettmischung, umfassend:
(i) 90 bis 99,8 Gew.-% eines flüssigen Öls,
(ii) 10 bis 0,2 Gew.-% einer harten Fettkomponente, die die Fähigkeit aufweist, ein kristallines Netzwerk im Endprodukt auszubilden, vorzugsweise gehärtetes Erukasäure-reiches Rapsöl,
wobei die Gesamtzusammensetzung durch das Vorliegen von 0,5 bis 5 Gew.-% an Aromabestandteilen, bezogen auf die gesamte Zusammensetzung aromatisiert ist, und die Fettzusammensetzung im wesentlichen keine trans-Fettsäuren aufweist, wobei die Mengen an trans-Fettsäuren kleiner als 5 Gew.-%, bevorzugt kleiner als 0,5 Gew.-%, berechnet auf den Gesamtfettsäuregehalt, beträgt.

2. Vergießbare Fettzusammensetzung nach Anspruch 1, worin die Kräuter und/oder Gewürze gefrorene frische Kräuter und/ oder Gewürze sind, und 10 bis 95 Gew.-% Wasser enthalten.

3. Vergießbare Fettzusammensetzung nach den Ansprüchen 1 oder 2, worin die Kräuter ausgewählt sind aus der aus Salbei, Rosmarin, Basilikum, Thymian, Oregano, Dill, Petersilie, Knoblauch, Zwiebel, Bohnenkraut, Majoran, Drachensaat, rotem/grünem/gelbem Pfeffer und Mischungen hiervon, bekannt als Provencal und Italian, bestehenden Gruppe, während die Gewürze ausgewählt werden aus der aus schwarzem und weißem Pfeffer, Muskatnuß, Muskatblüte, Curry, Curcuma, Safran, Gewürznelke und Mischungen hiervon bestehenden Gruppe.

4. VergLeßbare Fettzusammensetzung nach Anspruch 3, worin das Salz NaCl darstellt.

5. Vergießbare Fettzusammensetzung nach Anspruch 1, worin das flüssige Öl ausgewählt ist aus der aus Sonnenblumenöl, Oleinsäure-reichem Sonnenblumenöl, Saffloröl, Oleinsäure-reichem Saffloröl, Sojabohnenöl, Maisöl, Baumwollsamenöl, Arachidinsäureöl, Oleinfraktionen von natürlichen Ölen, wie Palmölolein und MCT-Ölen bestehenden Gruppe.

6. Vergießbare Fettzusammensetzung nach Anspruch 5, worin das Öl einen Festfettgehalt (NMR-Puls, nicht-stab.) von weniger als 10% bei 20°C aufweist.

7. Vergießbare Fettzusammensetzung nach den Ansprüchen 1 bis 6, worin das harte Fett eine Iodzahl von weniger als 10 aufweist und bevorzugt mehr als 40% gesättigte C₂₀₊-Fettsäuren enthält.

8. Vergießbare Fettzusammensetzung nach den Ansprüchen 1 bis 7, worin die Fettmischung aus flüssigem Öl und 1 bis 5 Gew.-% harter Fettkomponente eine Scheinviskosität bei 5°C von 100 bis 500 mPas nach Lagerung bei 5°C für 5 Tage oder bei 20°C von 50 bis 300 mPas nach Lagerung bei 20°C für 5 Tage, in beiden Fällen bei einer Scherung von 200 s⁻¹ aufweist.

9. Vergießbare Fettzusammensetzung nach Anspruch 1, worin die Aromakomponente ausgewählt ist aus etherischen Ölen, natürlichen oder naturidentischen Aromakomponenten.

10. Verfahren zur Herstellung einer vergießbaren Fettzusammensetzung nach den Ansprüchen 1 bis 9, worin:
(i) Kräuter und/oder Gewürze mit einem Teil des flüssigen Öls, das gegebenenfalls vorerhitzt wird, gemischt werden,
(ii) die aus (i) resultierende Mischung gegebenenfalls bei 70 bis 85°C 2 bis 10 Minuten erhitzt wird,
(iii) die aus (i) resultierende Mischung oder die aus (ii) resultierende erhitzte Mischung auf eine Temperatur von maximal 25°C abgekühlt wird,
(iv) der Rest des flüssigen Öls mit der harten Fettkomponente bei einer Temperatur unter 30°C gemischt wird und
(v) die Produkte aus (iii) und (iv) unter Zugabe des verzehrbaren Salzes gemischt werden, woraus das Produkt nach den Ansprüchen 1 bis 9 resultiert.

## Revendications

1. Composition de graisses pouvant être versée, stable à température ambiante, dans laquelle la composition de graisses comprend :
de 10 à 45 % en poids de plantes, d'épices, de noix et/ou de graines ;
de 0 à 20 % en poids de particules de fromage ;
de 1 à 10 % en poids d'un sel comestible ;
de 50 à 89 % en poids d'un mélange de graisses comprenant :
(i) de 90 à 99,8 % en poids d'huile liquide ;
(ii) de 10 à 0,2 % en poids d'un composant de graisse dure ayant la capacité de former un réseau de cristaux dans le produit fini et qui est de préférence de l'huile de colza hautement érucique,
la composition totale étant parfumée par la présence de 0,5 - 5 % en poids d'ingrédients de sapidité sur la base de la composition totale, et ladite composition de graisses ne contenant substantiellement pas d'acides gras trans, les quantités desdits acides gras trans étant inférieures à 5 % en poids, de préférence étant inférieures à 0,5 % en poids, calculé sur la base de la teneur totale en acides gras.

2. Composition de graisses pouvant être versée selon la revendication 1, dans laquelle les plantes et/ou les épices sont des plantes et/ou des épices fraîches congelées, contenant de 10 à 95 % en poids d'eau.

3. Composition de graisses pouvant être versée selon les revendications 1 ou 2, dans laquelle les plantes sont sélectionnées à partir du groupe composé de la sauge, du romarin, du basilic, du thym, de l'origan, du fenouil, du persil, de l'ail, de l'oignon, de la sarriette, de la marjolaine, de l'estragon, du poivron rouge/vert/jaune et des mélanges de ceux-ci connus sous le nom de Mélange Provençal ou mélange Italien, et les épices sont sélectionnés à partir du groupe composé du poivre blanc et du poivre gris, de la muscade, du macis, du curry, du curcuma, du safran, du clou de girofle et des mélanges de ceux-ci.

4. Composition de graisses pouvant être versée selon la revendication 3, dans laquelle le sel est du NaCl.

5. Composition de graisses pouvant être versée selon la revendication 1, dans laquelle l'huile liquide est sélectionnée à partir du groupe composé de l'huile de tournesol, de l'huile de tournesol hautement oléique, de l'huile de carthame, de l'huile de carthame hautement oléique, de l'huile de soja, de l'huile de maïs, de l'huile de graine de coton, de l'huile d'arachide, des fractions oléiques d'huile naturelles telles que l'oléine d'huile de palme, des huiles MTC.

6. Composition de graisses pouvant être versée selon la revendication 5, dans laquelle l'huile a une teneur en matières grasses solides (RMN à impulsions ; non stabilisé) inférieure à 10 % à 20°C.

7. Composition de graisses pouvant être versée selon l'une quelconque des revendications 1 à 6, dans laquelle la graisse dure à une valeur d'iode (IV) inférieure à 10 et contient de préférence plus de 40 % en poids d'acides gras saturés en C20+.

8. Composition de graisses pouvant être versée selon l'une quelconque des revendications 1 - 7, dans laquelle le mélange gras d'huile liquide et de 1 - 5 % en poids de composant gras dur a une viscosité apparente à 5°C de 100 - 500 m.Pa.s. après stockage pendant 5 jours à 5°C, ou à 20°C de 50 - 300 m.Pa.s après stockage pendant 5 jours à 20°C, le cisaillement étant dans les deux cas de 200 s-1.

9. Composition de graisses pouvant être versée selon la revendication 1, dans laquelle le composant de parfum est sélectionné à partir des huiles éthériques, des ingrédients de sapidité naturels ou identiques aux ingrédients naturels.

10. Procédé de préparation d'une composition de graisses pouvant être versée selon l'une quelconque des revendications 1 à 9, comprenant les étapes consistant à :
(i) mélanger les plantes, les épices, les noix et/ou les graines avec une partie de l'huile liquide, qui peut optionnellement être préchauffée ;
(ii) de façon optionnelle, chauffer le mélange obtenu en (i) à une température de 70 - 85°C pendant 2 à 10 minutes ;
(iii) faire refroidir à une température de 25°C maximum le mélange obtenu en (i) ou le mélange chauffé obtenu en (ii) ;
(iv) mélanger le reste de l'huile liquide avec le composant de graisse dure à une température inférieure à 30°C ;
(v) mélanger les produits obtenus en (iii) et en (iv) tout en ajoutant le sel comestible, ce qui donne le produit selon les revendications 1 à 9.
